# EUROPEAN PATENT APPLICATION

(11) **EP 4 530 676 A1**
(43) Date of publication of application: **02.04.2025**
(21) Application number: 24202774.6
(22) Date of filing: 26.09.2024
(51) Int. Cl.: G01S 17/00, G01S 17/48, G01S 17/894, G01S 7/4863, G01S 17/10, G01S 17/931

(54) **HYBRID 3D SENSING USING TIME-OF-FLIGHT, EVENT-BASED STRUCTURED LIGHT AND STEREO VISION**

(30) Priority: 27.09.2023 US 202318373512
(71) Applicant: VOLKSWAGEN AG, 38440 Wolfsburg (DE)
(72) Inventor: Küpper, Philipp Nils, Sacramento 95820 (US)

(57) **Abstract**

Approaches, techniques, and mechanisms are disclosed for 3D sensing. According to one embodiment, a light source located at a specific spatial location illuminates physical objects in a physical environment. A first sensor element of a first light detector at a first spatial location detects a first event of a first light reflection from an exterior surface position of a specific physical object. A second sensor element of a second light detector at a second spatial location detects a second event of a second light reflection from the exterior surface position of the specific physical object. Time-of-flight measurements and triangulation measurements are generated based on the first and second events and the first and second spatial locations. A set of specific spatial coordinate values for the exterior surface position of the specific physical object is determined based on the time-of-flight measurements and triangulation measurements.

## Description

### TECHNICAL FIELD

Embodiments relate generally to three-dimensional (3D) sensing, and, more specifically, to hybrid 3D sensing using time-of-flight, event-based structured light, and stereo vision.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

3D sensor data may be collected with image or range sensors to map a 3D space in a physical environment around the sensors. These sensors may be mounted with a vehicle. The 3D sensor data can accumulate over short time into a very large data set. In mapping applications such as those supporting assisted or autonomous driving, large amounts of high quality 3D sensor data need to be timely acquired, collected, and processed with strict real time requirements with limited computational, storage, and communication resources.

Even though the pace of innovation for 3D sensor solutions is very rapid, many existing 3D sensing technologies still show limitations for demanding practical applications in terms of limited spatial and/or temporal resolution, limited measurement range, and reconstruction errors on challenging optical surfaces. Further, maintaining correct calibration parameters for passive solutions and dependency on ambient lighting can be significant limiting factors in many existing 3D sensing solutions.

### BRIEF DESCRIPTION OF THE DRAWINGS

The present invention is illustrated by way of example, and not by way of limitation, in the figures of the accompanying drawings and in which like reference numerals refer to similar elements and in which:
FIG. 1A through FIG. 1C are illustrative system parameters of example 3D sensing techniques;
FIG. 2 is an illustrative view of an example 3D sensing system;
FIG. 3A illustrates an example spatial configuration of a (hybrid) 3D sensing system; FIG. 3B illustrates example operations of a (hybrid) 3D sensing system;
FIG. 4 illustrates an example process flow for 3D sensing; and
FIG. 5 is a block diagram of a computer system upon which embodiments of the invention may be implemented.

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

Embodiments are described herein according to the following outline:
1.0. General Overview
2.0. Structural Overview
   2.1. 3D Sensing System
   2.2. Light Source
   2.3. Geiger-Mode Detectors
   2.4. Local Compute
   2.5. Miscellaneous
3.0. Functional Overview
   3.1. Spatial Configurations
   3.2. Hybrid Sensing Operations
   3.3. Structured Light
   3.4. Compressing Sensing data
   3.5. Example Advantages
   3.6. Full Image acquisition
   3.7. Sampling and Calibration
4.0. Example Process Flows
5.0. Implementation Mechanism-Hardware Overview
6.0. Extensions and Alternatives

### 1.0. GENERAL OVERVIEW

A variety of different technical solutions may be implemented to obtain 3D scans of arbitrary physical environments or scenes. These 3D sensing solutions may be (e.g., mainly, etc.) classified into three categories as follows.

In the first category, 3D sensing solutions can be implemented using active, time-of-flight-based systems such as LiDAR (light detection and ranging) and radar. These sensing solutions are based on active light or radar signal emitters and direct measurements of flight times of a defined light or radar signal.

In the second category, 3D sensing solutions can be implemented using active, triangulation-based systems. These sensing solutions involve using at least one camera and a light projector to illuminate a physical environment or scene or portion(s) thereof. The camera and light projector may be spatially arranged in respective spatial locations in a relatively precisely defined geometrical configuration.

In the third category, 3D sensing solutions can be implemented using passive, triangulation-based systems. These sensing solutions involve using two or more camera views without - or with no dependence on - any active illumination of a physical environment or scene. These systems may be stereo (camera) systems with two or more cameras disposed at different spatial locations concurrently capturing different camera views.

Additional categories of 3D sensing solutions may also be implemented, for example, based on passive, monocular depth estimation using structure from motion or machine learning based approaches.

Under some approaches, 3D sensor systems such as used in an automotive context treat sensors used in different 3D sensing techniques - e.g., time-of-flight, stereo vision, etc. - as independent, standalone 3D sensors. This comes with a series of limitations as each data stream produced from a respective 3D sensing technique or corresponding sensor is processed independently and tremendous amounts of energy consumption and computing resources are spent processing largely redundant data, especially in the case of 3D sensing based on passive stereo vision. After large amounts of data streams are generated and processed in a standalone and independent manner from structured light, time-of-flight, and stereo imaging, there may be a further late-stage fusion of the data streams or stereo and LiDAR data therein, which consumes still more of relatively large computing resources while incurring still more of relatively high latencies in 3D object detection.

Techniques for 3D sensing as described herein can be used to combine some or all of the above-mentioned categories of 3D sensing in a single unified 3D sensing solution and support robust sensing of a 3D space such as a vehicle driving environment in an autonomous driving mapping application, while effectively and efficiently addressing many key challenges and limitations in other 3D sensing techniques. These techniques can be implemented relatively flexibly in conjunction with a wide variety of image sensors, range sensors and/or other 3D sensors in a wide variety of mapping applications.

For example, under the techniques as described herein, event-based Geiger-mode imagers or detectors may be used to support both passive and active 3D imaging and sensing concurrently without needing to generate large amounts of separate standalone data streams for these different sensing approaches and without needing to process or fuse these separate standalone data streams.

Different types of passive and active 3D sensing data can be concurrently generated from the same or different 3D sensors or detectors in combination with an active light emitter emitting scanning light beams or spatially and/or temporally coded structured light. These different types of 3D sensing data can be accurately correlated, combined, and refined at sensor element or pixel levels, for example, with local compute or local computing logic deployed with individual sensor elements.

Correlations, correspondence relationships, and 3D sensing data refinement at the sensor element or pixel levels of the different types of 3D sensing data can be performed in a relatively unified manner to further filter, compress or reduce data volumes in output 3D sensing data in a variety of application scenarios.

Example benefits of these imagers or detectors include relatively efficient data compression, highly improved low light performance, low latencies, low data bandwidth consumption, large sensing range, high spatial accuracy, and so on. In comparison with other approaches or other standalone systems using only a relatively limited subset of standard alone or independent 3D imaging techniques, a system using event-based Geiger-mode imagers, detectors or detector arrays as described herein can achieve much higher efficient resource usage and sensing performance.

Approaches, techniques, and mechanisms are disclosed for 3D (physical object) sensing. According to one embodiment, a light source located at a specific spatial location illuminates one or more physical objects in a physical environment. A first sensor element of a first light detector at a first spatial location detects a first event of a first light reflection from an exterior surface position of a specific physical object in the one or more physical object illuminated by the light source. A second sensor element of a second light detector at a second spatial location detects a second event of a second light reflection from the exterior surface position of the specific physical object illuminated by the light source. Time-of-flight measurements and triangulation measurements are generated based at least in part on the first and second events and the first and second spatial locations. A set of specific spatial coordinate values for the exterior surface position of the specific physical object is determined based at least in part on the time-of-flight measurements and triangulation measurements.

In other aspects, the invention encompasses computer apparatuses and computer-readable media configured to carry out the foregoing techniques.

### 2.0. STRUCTURAL OVERVIEW

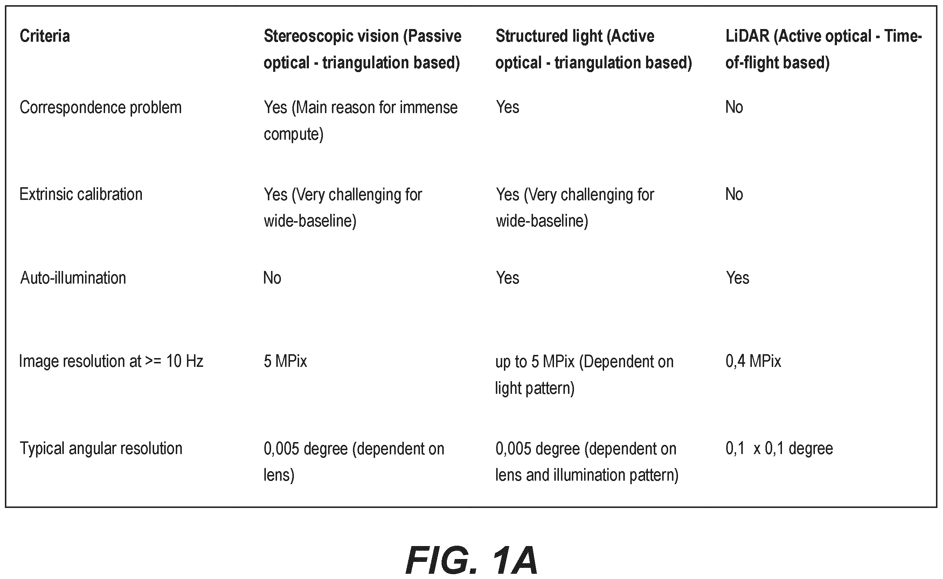

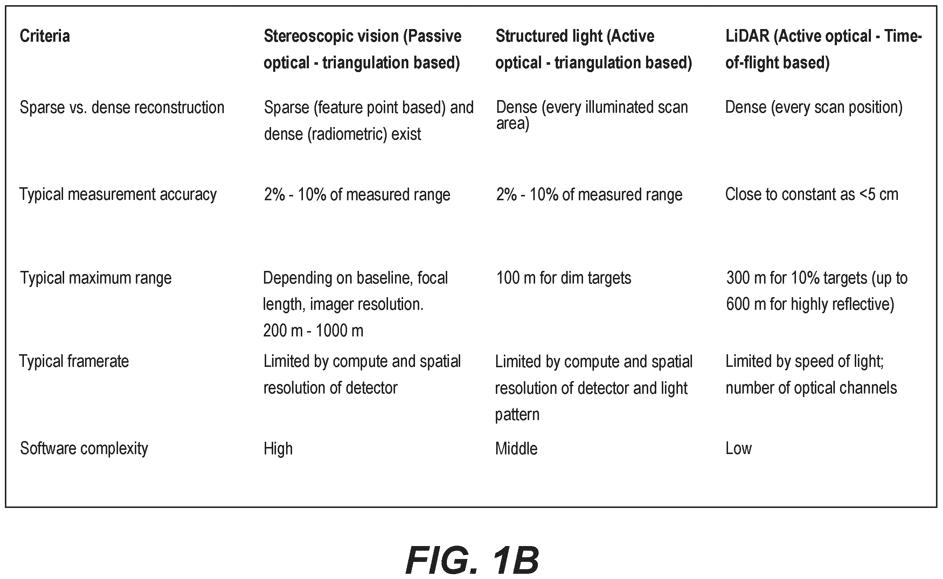

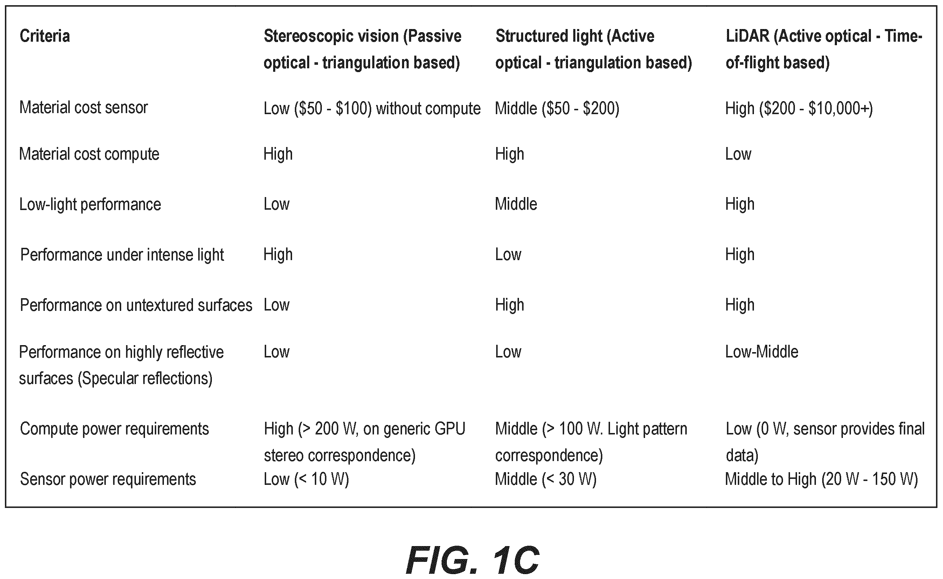

FIG. 1A through FIG. 1C are illustrative overviews of system parameters of example 3D sensing techniques. By way of illustration but not limitation, these 3D sensing techniques include: stereoscopic vision (passive optical-triangulation based) in the second column, structured light (active optical-triangulation based), and LiDAR (active optical time-of-flight based). The leftmost column of the tables in these figures includes a number of criteria, whereas the three right columns of the same tables include a number of comparative results for these different 3D sensing techniques based on the criteria in the leftmost column. As shown in FIG. 1A through FIG. 1C, each of the 3D sensing techniques/approaches has its unique strengths and weaknesses.

Under other approaches that do not implement techniques as described herein, driver assistance systems use different types of 3D sensing techniques such as passive vision in the form of (monocular or stereo) cameras, radar, and LiDAR as separate and independent sensing modalities, which provide their respective standalone and independent 3D sensing results as different sensor inputs to an overall perception system. In response to these standalone and independent 3D sensing results, the system subsequently takes care of fusing or integrating these sensor inputs into an overall 3D sensing result.

Under these other approaches, relatively high system latencies may be incurred, for example, due to limited temporal resolutions of direct-time-of-flight (dToF) sensors used in the pre-fused 3D sensing modalities. It is extremely difficult if not impossible to maintain proper alignment of sensors during operation (e.g., online calibration, etc.). As active dToF sensors - e.g., in combination with an active light source to illuminate the physical environment or visual scene - have limited angular resolutions, 3D detection and classification of objects at large distances may not be realized in the 3D sensing modalities relying on the active dToF sensors only. There are significant compute requirements for acquiring and processing high resolution stereo images - especially when these images are of high spatial and/or temporal resolutions and are acquired with camera systems/configurations with relatively wide baselines due to relatively large maximum pixel disparities and full-frame data processing involved. For passive sensing modalities, there are significant environmental limitations relating to relatively dim night-time scenarios, lack of local object texture, and contrast in visual objects featured in these images, etc.

In comparison, under techniques as described herein, 3D sensing data collected from individual sensor elements or pixels using different types of 3D sensing techniques can be relatively precisely correlated, integrated, refined, filtered, and output at the sensor-element or pixel level. In particular, event-based Geiger-mode detectors or sensor (element) arrays may be used to help efficiently combine 3D sensing data from different types of 3D sensing technique with significantly enhanced overall or combined 3D sensing performance as compared with the other approaches.

### 2.1. 3D SENSING SYSTEM

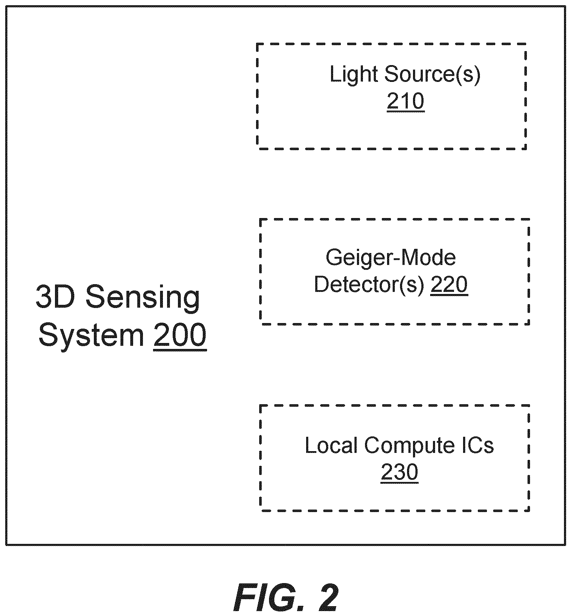

FIG. 2 is an illustrative view of an example 3D sensing system 200 in which the techniques described herein may be practiced, according to an embodiment. The system 200 may include components such as a light source 210, two or more Geiger-mode detectors 220, and local computing logics (or integrated circuits) 230. Additionally, optionally or alternatively, the system 200 may comprise one or more computing devices (not shown). These components including but not limited to the local computing logics 230 and/or the one or more computing devices comprise any combination of hardware and software configured to implement control and/or perform various (e.g., light illumination, 3D sensing, active triangulation, passive triangulation, time-of-flight measurements, measurement correlation, 3D sensing data refinement, filtering, etc.) operations described herein. The one or more computing devices may include one or more memories storing instructions for implementing the various components described herein, one or more hardware processors configured to execute the instructions stored in the one or more memories, and various data repositories in the one or more memories for storing data structures utilized and manipulated by the various components.

### 2.2. LIGHT SOURCE

The 3D sensing system 200 comprises a (e.g., laser, non-laser, etc.) light source 210 that is used to emit or generate light to actively illuminate - apart from or in addition to ambient light or other light source not under the control of the system 200 - a physical environment (e.g., a 3D space around a road segment, etc.) or visual scene from which 3D sensing data are to be generated by the system 200.

The (illumination) light emitted or generated by the light source 210 may be spatially (e.g., in specific spatial pattern(s), etc.) and/or temporarily (e.g., in specific temporal pattern(s), etc.) modulated or coded, for example, under the realtime control of the computing devices of the system 200. In some operational scenarios, the illumination light may be temporarily coded or modulated into a series of illumination light pulses with no illumination light generated in between two time-consecutive illumination light pulses in the series. Hence, the illumination light is only emitted or generated by the light source 210 during (duty cycles of) the illumination light pulses.

In some operational scenarios, the illumination light directed to (illuminating) the physical environment or visual scene to be probed by the 3D sensing system 200 may be spatially coded or modulated in a structured manner to form specific illumination spatial pattern(s). Structural information in for an illumination spatial pattern can be used, along with illumination timing information, by the 3D sensing system 200 or 3D sensing techniques/methods implemented therein to generate and/or correlate relatively accurately 3D sensor data or timing and spatial measurements (e.g., time-of-flight, disparity, displacements, etc.) relating to positions and/or motions of physical objects (e.g., pedestrians, obstacles, vehicles, trees, lanes, road sides, posts, etc.) present in the physical environment or visual scene.

Example illumination spatial patterns used by the 3D sensing system 200 or the light source 210 therein to illuminate the physical environment or visual scene may include one or more different regular spatial patterns such as illumination patterns formed by illuminated parallel stripes or lines with interstitial or intermediate non-illuminated stripes or lines in between the illuminated parallel stripes or lines.

Additionally, optionally or alternatively, example illumination spatial patterns used by the 3D sensing system 200 or the light source 210 therein to illuminate the physical environment or visual scene may include one or more different irregular spatial patterns such as pseudo-random spatial illumination patterns each formed with one or more non-regular illumination spatial shapes.

The 3D sensing system 200 may assign to or index some or all of these regular and/or irregular illumination spatial patterns with individual unique or distinct identifiers and/or with individual time codes.

In some operational scenarios, a specific fixed illumination spatial pattern selected from among all the different illumination spatial patterns may be used by the 3D sensing system (200) to probe (e.g., sense, collect and/or derive, etc.) 3D positions of physical objects present in the physical environment.

In some operational scenarios, two or more different indexed illumination spatial patterns can be selected from among all the different illumination spatial patterns at runtime or based on a preconfigured selection sequence and temporally coded - or respectively generated at two or more different consecutive time points - in a time sequence during a time interval in which the physical environment or visual scene is probed by the 3D sensing system 200.

The light source 210 can be implemented or deployed in the 3D sensing system 200 to support emitting or generating spatially and/or temporally modulated/coded illumination spatial patterns therein at various spatial and/or temporal resolutions. Spatial resolutions in illumination spatial patterns supported or operated by the light source 210 may range from a relatively low spatial resolution to a relatively high spatial resolution. These spatial resolutions may correspond to concurrent or sequential illumination light beams or pulses directed at 1000, 10000, 1000000 or more different spatial angles covering a unit solid angle (e.g., one pi, etc.). Temporal resolutions in these illumination spatial patterns supported or operated by the light source 210 may range from a relatively low temporal resolution to a relatively high temporal resolution. These temporal resolutions may correspond to illumination light beams or pulses with a duty cycle of one or more fractional nano-second, one or more nanoseconds, one or more microseconds, etc.) and a pitch or separation between two time-consecutive illumination light beams or pulses separated by one or more nanoseconds, one or more microseconds, one or more milliseconds, etc.

In some operational scenarios, the light source 210 illuminates the (e.g., entire, etc.) visual scene with a spatially and/or temporally coded illumination spatial pattern. In some operational scenarios, a scanner can be used to sequentially illuminate different spatial portions (e.g., different angles, etc.) of the visual scene over a defined spatial field of view.

The 3D sensing system 200 or the Geiger-mode detectors 220 therein can control, monitor or track spatial and timing information - up to the relatively high spatial and/or temporal resolutions - of some or all of the illumination spatial patterns used by the light source 210 to illuminate the physical environment or visual scene. The spatial and timing information tracked by the 3D sensing system 200 may include (precise knowledge of) specific time points and/or specific spatial directions at which there is a presence or absence of illumination light emitted or generated by the light source 210.

Spatial and/or temporal resolutions may be specifically selected by the 3D sensing system 200 for the illumination spatial patterns to provide relatively large number of relatively (e.g., sufficiently, etc.) short pulses or light beams during a measurement time interval to enable direct implementation or performance of time-of-flight measurements by the Geiger-mode detectors 220. By way of example but not limitation, the light source 210 can be (e.g., inherently, using a common time reference signal/source, electronically, etc.) time synchronized with light receiver or sensor element arrays in the Geiger-mode detectors 220, so that time-of-flight measurements and time-gating operations with relatively high precision can be realized by the Geiger-mode detectors 220 and sensor elements therein.

### 2.3. GEIGER-MODE DETECTORS

The 3D sensing system 200 comprises one, two or more Geiger-mode detectors 220. Some or all of these Geiger-mode detectors 220 may be implemented as event-based Geiger-mode detector (EBGMD) arrays comprising sensor/scan elements such as light sensors with relatively high light sensitivity. Each of these light sensors may be capable of detecting down to a single photon or a relatively short light pulse such as emitted or generated by the light source 210 with a relatively short duty cycle. Example Geiger-mode sensor elements in a detector or detector array as described herein may include, but are not necessarily limited to only, single photon avalanche diode (SPAD), silicon photomultiplier (SiPM) diode, etc.

Each of the Geiger-mode detectors may represent a special camera - e.g., a ToF camera, a triangulation-based camera, a camera implementing both ToF and triangulation based 3D sensing operations, etc. - of relatively high or the highest light sensitivity. Each of the Geiger-mode detectors 220 may include or operate in conjunction with a lens or lens system to gather reflected light or to record receptions of reflected light photons from a physical environment in which the detector is deployed and projects the reflected light or photons onto the sensor/scan elements located at an image plane (or a focal plane) of the camera.

Each of the Geiger-mode detectors 220 may include these light sensors arrayed or arranged spatially with relatively high spatial resolutions such as spatial distributions of 1000 x 1000 or more sensor or scan elements (or pixels) over a unit (e.g., one or more squared centimeters, ¼ pi, ½ pi, etc.) of spatial area or solid angle. In some operational scenarios, the light sensors - also referred to as sensor/scan elements, array elements, pixels or cells - in the Geiger-mode detector 220 may be arranged in a two-dimensional (2D) spatial surface such as a plane, a spherical portion, a curved surface, etc. These light sensors in the Geiger-mode detector 220 may form a relatively large (e.g., relatively densely populated, etc.) array, for example in a rectilinear pattern comprising rows and columns distributed uniformly with specific densities, pitches, distances, or displacements. In some operational scenarios, cells/array/sensor elements in a detector/sensor (array) as described herein may point to, or may be configured with, different spatial angles in relation to a (local) device-specific or device-stationary coordinate system.

The Geiger-mode detectors 220 in the 3D sensing system 200 may contain sensor arrays of relatively large sizes. With the large-size sensor arrays, any, some or all of a wide variety of novel multi-modality 3D imaging solutions can be conceptualized and implemented by the 3D sensing system 200. The Geiger-mode detectors 220 enable a wide range of (e.g., novel, multi-modality, etc.) 3D sensing applications and dramatically (e.g., several tens of times, etc.) improve capabilities of the 3D sensing system 200 as compared with other systems/solutions using CMOS based imagers.

In some operational scenarios, multiple Geiger-mode detectors 220 such as event-based SPAD detectors are used in the 3D sensing system 200. These detectors 220 can be arranged with one another in respective spatial locations in a defined geometrical arrangement configuration. For example, two of these detectors 220 may be arranged with a wide baseline or a relatively large spatial distance or displacement; the two detectors can be used as a combination to perform direct time-of-flight measurements as well as instantaneous triangulation for the purpose of improving measurement accuracy and robustness.

As used herein, triangulation as described herein may refer to one or more of: active triangulation, at least partly active-illumination-based triangulation, passive triangulation, at least partly ambient-light-based triangulation, pixel-level triangulation, per-pixel-pair triangulation, sensor-element-level triangulation, per-sensor-element pair triangulation, detector-level triangulation, per-detector-pair-level triangulation, imager-level triangulation, per-imager-pair-level triangulation, etc.

Instantaneous triangulation refers to triangulation directly implemented at the sensor or sensor element level and performed before outputting (e.g., full-frame, etc.) image data that may be used for triangulation. Under other approaches, image texture or content of different images acquired by different cameras with spatial offsets, disparity or parallax may be analyzed. Pixels or corresponding pixel data from the different images may be associated to be relating to a common point of a visual object depicted in the images. This type of data association depends on complicated computations and is indirect and inaccurate. In comparison, under the instantaneous triangulation as described, data association - stereo correspondence relationships between two sensor elements or pixels - can be directly made at the sensor element level. For example, two light reflection events of the same light pulse can be detected respectively by two sensor elements of two sensors/detectors with spatial offsets, disparity or parallax. These two light reflection events can be directly associated to be relating to a common point of a physical object without any complicated and possibly inaccurate image analysis. In addition, under techniques as described herein, triangulation performed with the light reflection events by two sensor elements can be done immediately and asynchronously as soon as these measurements and information for the position are collected - without full image frame(s) that would depict many potential to-be-image-analyzed object positions.

As a variety of different types of 3D sensing techniques/modalities can be used in parallel, the two detectors can generate relatively accurate measurements even if some of the implemented 3D sensing modalities - and/or even if some of the two or more detectors - fail at runtime to provide 3D measurements.

The Geiger-mode detectors 220 - or the EBGMD arrays - can be time-synchronized with one another and/or with the light source 210 to have a common time base in reference to a common time reference clock signal/source. The common time base and tracked spatial and/or timing information of illumination light generated by the light source 210 can be used by the 3D sensing system 200 or each of the Geiger-mode detectors 220 to perform relatively precise time gating operations of reflected light generated by reflection of the illumination light from physical objects or (portions thereof) in the physical environment or visual scene.

Time gating operations performed by a Geiger-mode detector as described herein can process a (e.g., raw, light-generated, etc.) time-varying sensor signal or the waveform thereof generated by an (e.g., each, etc.) individual sensor element in the Geiger-mode detector to isolate a specific (e.g., non-stationary, pulse-like, burst, etc.) portion of a time record or a time duration in the sensor signal, where the specific portion of the time record or duration in the sensor signal captures the sensor element's response to reflected light (of an illumination light pulse generated by the light source 210 from a specific 3D position in the physical environment or visual scene.

As a result, a time-of-flight relating to an illumination light pulse may be relatively precisely determined or measured - by the Geier-mode detector or the sensor element therein - based at least in part on a time difference between a first time point at which the illumination light pulse was emitted or generated by the light source 210 and a second later time point corresponding to the specific portion of the time record or duration in the sensor signal corresponding to a reception of a portion of light reflection caused by the illumination light pulse incident onto a light reflective object or location. The first time point and the second time point may be (e.g., inherently, electrically wired to the same clock signal, etc.) represented as two time points/instances in the same common time base employed by the light source 210 and the Geiger-mode detector.

Hence, under technique as described herein, the 3D sensing system 200 or a Geiger-mode detector 220 therein can generate relatively precise time-of-flight measurements or determinations at individual sensor element (or pixel) level. In addition, because of relatively high sensitivity - e.g., responsive to a relatively short light pulse down to a single photon - of each of the sensor elements, a relatively large number of time-of-flight measurements can be made by each of the sensor elements in the Geiger-mode detector 220 over a relatively short time period, thereby achieving a relatively high (sensor measurement) bandwidth.

The same individual sensor signals acquired by individual sensor elements in the Geiger-mode detector 220 over a common time interval (e.g., 2 milliseconds, 5 milliseconds, 10 milliseconds, etc.) can be used to generate both time-of-flight measurements/determinations and the (e.g., partial, entire, etc.) image.

In non-limiting examples, a Geiger-mode detector 220 or an EBGMD array in the 3D sensing system 200 may be used to generate, acquire or build a grayscale (e.g., without using color filters, etc.) image and/or an RGB image (e.g., using Bayer color filters, etc.) of the physical environment or visual scene, leveraging available ambient light present in the environment/scene. The image acquired with the Geiger-mode detector comprises a plurality of image pixels arranged in an array pattern. Each of the image pixels may comprise subpixels each of which may be used to capture a luminance or luma value (in the case of the image being a grayscale image), or red, green, and blue subpixel chroma values (in the case of the image being an RGB image).

By way of illustration but not limitation, each of the individual sensor signals can be time-gated to determine one or more bursts or time records/durations thereof corresponding to sensory responses to received reflected light of illumination light reflected off from physical objects present in the environment/scene. While the timing information of the bursts or time records/durations thereof can be used to generate time-of-flight measurements/determinations for each of these individual sensors in the Geiger-mode detector, signal portions of the individual sensor signals outside these bursts can be deemed to be the individual sensors' respective responses to available ambient light present in the environment/scene. These signal portions may be used, aggregated, time-gated or otherwise integrated into luminance and/or RGB pixel values that constitute a grayscale or RGB image of the environment/scene.

### 2.4. LOCAL COMPUTE

A sensor or sensor element such as a SPAD or SiPM sensor in a Geiger-mode detector 220 may support light sensor measurements with a relatively large dynamic range of light detection from a single photon to a light pulse of multiple photos at a relatively high temporal resolutions from every few seconds to every few nanoseconds or sub-nanoseconds. As a result, a relatively large amount of raw sensor data can be generated by each sensor or sensor element in the Geiger-mode detector 220 over time. As the Geiger-mode detector 220 may contain up to millions or more sensors or sensor elements in up to millions or more cells, these sensors can generate enormous amounts of raw sensor data in a given time period (e.g., every 5 milliseconds, every 10 milliseconds, every 20 milliseconds, every second, etc.).

A Geiger-mode detector 220 in the 3D sensing system 200 may comprise local compute logics or ICs 230. In some operational scenarios, some or all of the local compute logics or ICs 230 may be implemented at least in part in hardware with one or more of: graphic processing unit(s) or GPU(s), CPUs, SoCs, ASICs, FPGAs, etc. These local compute logics or ICS 230 may be deployed with or spatially near (e.g., SPAD, SiPM, etc.) sensors or sensor elements of the Geiger-mode detector 220 in different cells or array positions in the Geiger-mode detector 220. The local compute logics or ICs 230 of a Geiger-mode detector 220 may represent built-in computing logic in the Geiger-mode detector 220 (e.g., in the same physical housing, on the same substrate or physical support, etc.). The local compute logics or ICs 230 are separate from host-based CPU(s), which may also be deployed in the 3D sensing system 200.

In some operational scenarios, the local compute ICs 230 - along with local electric connects and/or local electrodes - may be placed or disposed in designated (e.g., corner, back, one or different layers in a multi-layer cell structure, etc.) spatial regions of respective cells in which (e.g., one-to-one, one-to-many, etc.) corresponding sensors are housed or disposed and built with the sensors in the same physical package or on the same substrate or physical support.

Each local compute logic or IC 230 residing with or corresponding to one or more respective sensors or sensor elements in the Geiger-mode detector 220 can be used to perform a variety of local or *in situ* computing tasks or operations. The local compute logic or IC 230 may analyze or generate local statistics of detections made with the respective sensor element(s) (or respective pixel(s)). The local compute logic or IC 230 can perform signal filtering or modulation on raw sensor signals generated by the respective sensor element(s), distinguish between signal portions associated with ambient light and/or with active illuminated light pulse(s). The local compute logic or IC 230 may implement parallel computing or operate with other local compute logics or ICs 230 for other sensor elements and/or non-local compute logics or ICs to perform partially serialized fast computing for multiple sensor elements (e.g., for a pair of sensor elements detecting two reflections of the same light pulse, etc.).

For example, the local compute logic or IC 230 may perform (e.g., per-cell-based, per-cell-group-based, per-detector-based, etc.) event-based data compression of raw sensor data collected by the corresponding sensors or sensor elements and to provide or output a refined much-reduced (as compared with raw sensor data) data stream of locally compressed and/or processed sensor data in place of some or all of the raw sensor data. Example locally compressed and/or processed sensor data generated by a local compute logic or IC 230 may include, but are not necessarily limited to only, any, some or all of: relatively precise 3D positional data of physical objects, grayscale and/or RGB images of the physical environment or visual scene, local statistics or group values of (e.g., reflected, etc.) light detections.

As used herein, an "event" refers to a detection or reception, by a sensor or sensor element, of a light reflection, of an earlier light-source emitted light pulse, from a physical object or 3D position present in the physical environment or visual scene. The light pulse may include a cluster or series of photons. The sensor or sensor element can report or generate the event with positional and/or directional information in response to detecting or receiving one or more photos in the light pulse as the light reflection from the physical object illuminated by the light pulse.

The local compute logic or IC 230 can be used to perform event detections or detections of reflections, of light-source emitted light pulses, from physical objects illuminated by these light pulses. For example, the local compute logic or IC 230 may collect raw sensor data made with a sensor or sensor element over a time period. The collected raw sensor data may comprise a sequence of consecutive raw received light measurements made by the sensor or sensor element. The local compute logic or IC 230 may perform time gating operations to isolate or identify bursts in a waveform formed by the sequence of consecutive light measurements. These bursts may be correlated with earlier emitted light pulses from the light source 210 and/or may hence be identified as events.

In response to detecting an event relating to a reflection of a physical object at a specific 3D position based on the raw sensor data collected from the sensor or sensor element, the local compute logic or IC 230 can use timing information of a corresponding light pulse emitted by the light source 210 and timing information of the detected event to compute or determine a time-of flight for the detected event or over a light path from the light source 210 to the specific 3D position and from the specific 3D position to the sensor or sensor element. Additionally, optionally or alternatively, the local compute logic or IC 230 may compute or determine a distance between the sensor or sensor element (or the light source 210 and the specific 3D position based on the light speed and the time-of-flight. Additionally, optionally or alternatively, the local compute logic or IC 230 may compute or determine spatial coordinates (e.g., in a coordinate system stationary to the Geiger-mode detector 220, etc.) of the specific 3D position based on directions/angles of a cell in which the sensor or sensor element resides and the distance computed from the time-of-flight. The directions/angles of the cell may correspond to directions/angles along which the sensor or sensor element is directed to receive reflected light from the physical environment or visual scene.

The Geiger-mode detector 220 may comprise an array of (e.g., SPAD, SiPM, etc.) light sensors or sensor elements of superior low-light sensitivity and extreme bandwidth (e.g., capable of performing consecutive light measurements in relatively high temporal resolution, etc.). A waveform comprising a sequence of consecutive raw light sensor measurements over a time duration by a sensor or sensor element in the detector 220 may contain relatively non-stationary burst waveform portions (or time records/periods) as well as relatively stationary non-burst waveform portions. While the burst waveform portions can be correlated with light pulses emitted by the light source 210 to provide or derive time-of-flight data, the non-burst waveform portions can be used to capture, or generate sensor measurements of, ambient light reflections of physical objects in the physical environment or visual scene. Sensor measurements of ambient light reflections by some or all of the sensors or sensor elements in the Geiger-mode detector 220 may be used to generate grayscale or RGB images of the physical environment or visual scene contemporaneously while the time-of-flight data relating to physical objects present in the physical environment or visual scene is generated. Hence, the Geiger-mode detector 220 can be used to take advantage of the superior low-light sensitivity and extreme bandwidth of the sensors or sensor elements in the detector 220 and to combine or perform imaging tasks with time-of-flight capabilities.

Some or all of the events, timing information of reflections and/or light pulses, distances from physical objects or 3D positions, spatial coordinates of physical objects or 3D positions, grayscale and/or RGB images, etc., may be provided or output in a per-detector refined much-reduced (as compared with raw sensor data) data stream as locally compressed and/or processed sensor data in place of some or all of the raw sensor data generated by the individual sensors or sensor elements of the Geiger-mode detector 220.

Hence, data volumes from individual sensors or sensor elements to other components/devices of the Geiger-mode detector as well as data volumes from the Geiger-mode detector to other components/devices of the 3D sensing system 200 may be significantly compressed or reduced under techniques as described herein.

In some operational scenarios, a cross-sensor local compute logic or IC 230 may be deployed with the Geiger-mode detector 220. The cross-sensor local compute logic or IC 230 - which may not be local to any particular sensors or sensor elements - can be used to perform active triangulation between the array of sensors or sensor elements and the light source 210 and/or to supply control or configuration information to local compute logics or ICs 230 local to sensors or sensor elements and/or to coordinate some or all operations of the local compute logics or ICs 230. Additionally, optionally or alternatively, the cross-sensor local compute logic or IC 230 can perform imager-level or detector-level filtering or fusion operations to further refine or reduce the size or data volume of an output data stream generated by the Geiger-mode detector 220 including but not limited to image signal processing (e.g., error handling, image data compression, etc.) of image data.

Additionally, optionally or alternatively, the 3D sensing system 200 may include cross-detector compute logics or computing devices to relatively efficiently process and fuse the much refined time-of-flight measurements from each of the Geiger-mode detectors 220 in the 3D sensing system 200, to correlate events detected by different Geiger-mode detectors 220 and respective cell or pixel positions associated with these corrected events, to refine time-of-flight 3D positional measurements based at least in part on the corrected events, to perform cross-detector triangulation operations based at least in part on the refined time-of-flight measurements and the respective cell or pixel positions associated with the correlated events used to refine the time-of-flight measurements, and so on.

### 2.5. MISCELLANEOUS

The system 200 illustrates only one of many possible arrangements of components configured to provide the functionality described herein. Other arrangements may include fewer, additional, or different components, and the division of work between the components may vary depending on the arrangement.

### 3.0. FUNCTIONAL OVERVIEW

Two or more different types of 3D sensing techniques/modalities can be combined or integrated at the sensor-element level and/or at the detector/imager level in an integrated, event-based 3D sensing system (e.g., 200 of FIG. 2, etc.) as described herein. These different types of 3D sensing techniques may include, but are not necessarily limited to only, some or all of: time-of-flight (e.g., LiDAR, Geiger-mode detector 220, etc.), temporally and/or spatially coded structured light, passive stereo vision (e.g., passive triangulation between multiple images taken by Geiger-mode detectors 220 at different spatial locations, etc.), active triangulation (e.g., between a Geiger-mode detector 220 and a light source 210 at different spatial locations, etc.), and so on.

The 3D sensing system 200 may be built as a stereo, structured light, time-of-flight hybrid sensor system leveraging two (or more) relatively high resolution EBGMD (sensor) arrays in combination with a laser illuminator as a light source to emit laser light to illuminate a physical environment or visual scene in which 3D sensing techniques/modalities of different types are integrated and used by the 3D sensing system 200 to detect physical objects and 3D positions thereof in the environment or scene.

A variety of different types of 3D sensing operations such as based on ToF and/or (instantaneous) triangulation can be performed using each of individual pairs of sensor elements (or pixels) from two imagers/detectors such as two event-based 3D sensors located at two different spatial locations. Under techniques as described herein, these different types of 3D sensing operations can be performed in parallel and/or in combination for each individual pair of sensor elements (or pixels) without needing to generate and/or receive a full-frame stereoscopic image or a pair of full-frame images captured by two different cameras/images.

As a hybrid sensor system, the 3D sensing system 200 can efficiently and effectively address difficult challenges faced by other approaches and bring about distinct benefits lacking in the other approaches. These distinct benefits include, but are not limited to, robust, accurate 3D sensing or 3D positional measurements with high spatiotemporal resolutions; independence of lighting conditions; independence of local object contrast and texture; effective, continuous online or runtime calibration of the entire system after the system has been deployed in the field; resource efficient computation; etc.

In an embodiment, some or all techniques and/or methods described below may be implemented using one or more computer programs, other software elements, and/or digital logic in any of a general-purpose computer or a special-purpose computer, while performing data retrieval, transformation, and storage operations that involve interacting with and transforming the physical state of memory of the computer.

### 3.1. SPATIAL CONFIGURATIONS

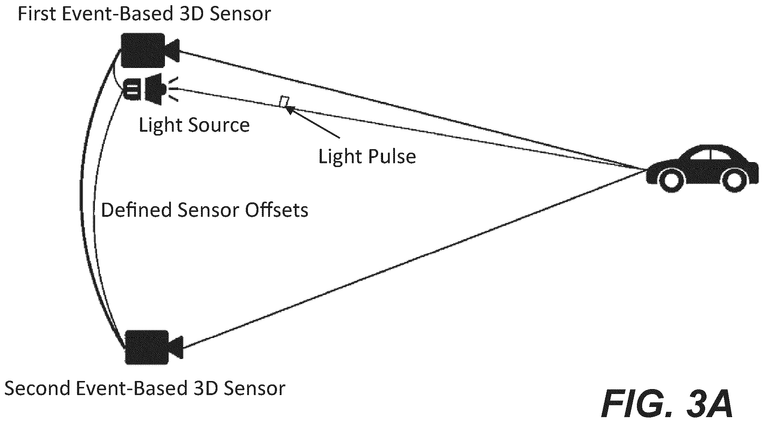

FIG. 3A illustrates an example spatial configuration of a (hybrid) 3D sensing system (e.g., 200 of FIG. 2, etc.) deployed in a physical environment or visual scene to detect physical objects (e.g., vehicles, pedestrians, roads, buildings, obstacles, etc.) or their 3D positions in the physical environment. For the purpose of illustration, the 3D sensing system may include two event-based 3D sensors such as two (event-based) Geiger-mode detectors (e.g., 220 of FIG. 2, EBGMDs, etc.) located at two different spatial locations, for example, attached to or integrated with an overall rigid structure, frame or mechanical support.

The event-based 3D sensors or Geiger-mode detectors are inherently of relatively superior low-light sensitivity and are sensitive or responsive to individual photons or light pulses of relatively short time durations. These sensors/detectors are also of extreme or relatively high bandwidth in that a relatively large volume of measurements can be made by individual sensors in parallel and processed by local and non-local compute ICs. By way of comparison, ToF measurements for relatively close ranges are challenging under other approaches that do not implement techniques as described herein.

The 3D sensing system includes a light source (e.g., 210 of FIG. 2, etc.) at a designated spatial location that can be used by the system to (actively) illuminate the physical environment or scene. As a part of (hybrid) 3D sensing operations, the 3D sensing system can control or operate the light source to send or emit light pulses or corresponding light rays into the physical environment or visual scene, for example, in a temporally and/or spatially coded illumination patterns using narrow or broad beam light pulses. The active illumination light from the light source may be in addition to or in place of any ambient light independent of the light source that may be present in the physical environment or visual scene.

Each of the two event-based 3D sensors may comprise a respective plurality of individual (Geiger-mode) sensors or sensor elements arranged in an array pattern (e.g., rows and columns, pixels, etc.) forming a two-dimensional surface portion. Each of these individual sensors or sensor elements in an event-based 3D sensors may be a SPAD or SiPM sensor capable of detecting a light pulse or a reflection thereof with light sensitivity down to a single photon.

In some operational scenarios, the spatial position at which the light source is placed is relatively closely collocated with or to a first event-based 3D sensor of FIG. 3A. Hence, the spatial position at which the light source is placed has a relatively large (e.g., sufficiently large for triangulation operations with respect to far away objects located at 150 or 300 meters away, etc.) spacing (or distance/displacement) to a second event-based 3D sensor of FIG. 3A.

Local compute logics or ICs (not shown in FIG. 3A) can be disposed or deployed near corresponding individual sensors or sensor elements in an event-based 3D sensors to perform local processing or pre-processing operations on time varying sensor data generated by the individual sensors. Additionally, operationally or alternatively, local and non-local compute logics or ICs or CPUs (not shown in FIG. 3A) can be disposed or deployed with an event-based 3D sensors and/or with the 3D sensing system.

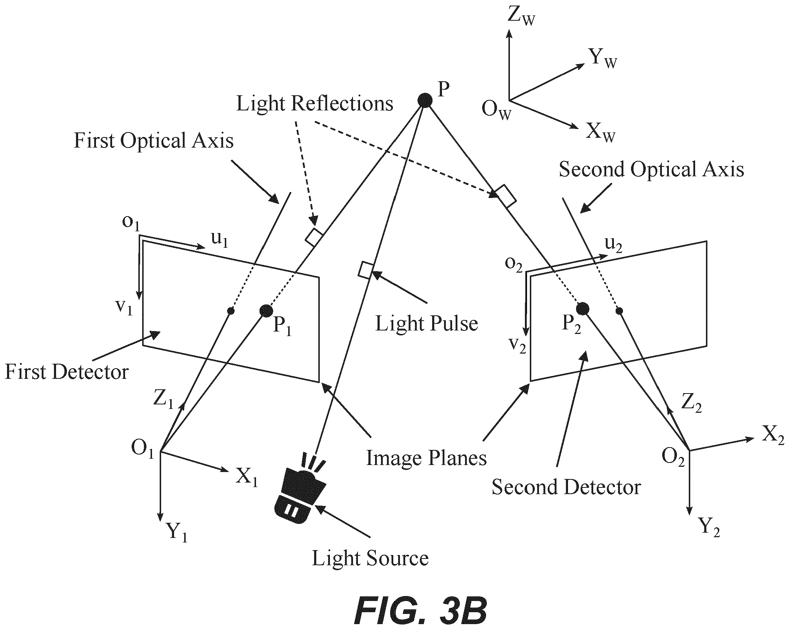

As further illustrated in FIG. 3B, the light source emits an overall illumination light signal (or series of signal portions with pulse coding or light pulses) into the physical environment or visual scene including a point P, which may be a location of a reflective object present in the physical environment. Light reflections of the emitted illumination light signal - e.g., one or more light pulses, including a light pulse directed to the spatial location P, etc. - from various locations of reflective objects present in the physical environment can be detected by the two event-based 3D sensor or Geiger-mode detectors (or EBGMDs).

The two event-based sensors may include a first Geiger-mode detector at a first spatial location in the physical environment or visual scene and a second different Geiger-mode detector at a second different spatial location in the same physical environment or visual scene. Each of the two event-based sensors or Geiger mode detectors (e.g., 220 of FIG. 2, etc.) may include a sensor array in which individual sensor elements are arranged in a 2D spatial pattern or surface (e.g., an image plane, one of image planes in FIG. 3B, etc.).

A (3D) spatial location - in the 3D sensing system or in the physical environment or visual scene - at which an event-based 3D sensor or Geiger-mode detector as described herein may be characterized, specified or represented by a combination of a reference position and a reference direction. The reference position may be set to a geometric or a symmetric center of the sensor array of the event based 3D sensor or Geiger-mode detector, whereas the reference direction may be set to an optical axis (e.g., first optical axis and second optical axis in FIG. 3B, etc.) of the sensor array as represented by the normal direction of the 2D surface formed by or conformed to spatial locations of the sensor array, which normal direction passes through the reference position.

As illustrated in FIG. 3B, a first detector-specific coordinate system may be used to represent sensor/scan element or pixel positions and/or orientation/direction of the first event-based 3D sensor or Geiger-mode detector, and may be a Cartesian coordinate system (e.g., stationary with the first event-based 3D sensor or Geiger-mode detector, etc.) with an origin or reference Oi and Xi, Yi, and Zi coordinates/axes. Similarly, a second detector-specific coordinate system may be used to represent sensor/scan element or pixel positions and/or orientation/direction of the second event-based 3D sensor or Geiger-mode detector, and may be a Cartesian coordinate system (e.g., stationary with the second event-based 3D sensor or Geiger-mode detector, etc.) with an origin or reference O₂ and X₂, Y₂, and Z₂ coordinates/axes as illustrated in FIG. 3B.

Sensor/scan element positions (e.g., P₁, P₂, etc.) of sensors in - and orientations or directions of - the sensor arrays of the first and second event-based 3D sensors or Geiger-mode detectors can be represented in the first detector-specific coordinate system and the second detector-specific coordinate system, respectively. The first event-based 3D sensor or Geiger-mode detector may include a first sensor array in which first individual sensor elements are arranged in a first image plane comprising two perpendicular directions u₁ and v₁ (as illustrated in FIG. 3B) starting from a first top-left sensor element position o₁ in the first device-specific coordinate system. Similarly, the second event-based 3D sensor or Geiger-mode detector may include a second sensor array in which second individual sensor elements are arranged in a second image plane comprising two perpendicular directions u₂ and v₂ (as illustrated in FIG. 3B) starting from a second top-left sensor element position o₂ in the second device-specific coordinate system.

The first and second event-based 3D sensors or Geiger-mode detectors are located at different spatial positions and/or different spatial directions in the 3D sensing system. For example, principal/reference points (passed through by optical axes) in the image planes of the first and second event-based 3D sensors or Geiger-mode detectors may be represented by different sets of spatial coordinate values in a world spatial coordinate system (e.g., a Cartesian coordinate system with an origin or reference Ow and X_{w}, Y_{w}, and Z_{w} coordinates/axes (as illustrated in FIG. 3B), stationary with the Earth, etc.) used to represent different spatial positions in a 3D space such as the physical environment or visual scene in the present example.

Additionally, optionally or alternatively, in various operational scenarios, optical axes of the first and second event-based 3D sensors or Geiger-mode detectors may or may not be along the same direction; the image planes of the first and second event-based 3D sensors or Geiger-mode detectors may or may not be co-planar.

At any given time, positions and/or orientations - of the 3D sensors, sensor/scan elements therein, optical axes, etc. - represented in a device-specific (e.g., device-stationary, etc.) coordinate system may be spatially transformed (e.g., rotation, translation, scaling, etc.) to be equivalently represented in a non-device-specific or non-device stationary coordinate system such as the world coordinate system.

Additionally, optionally or alternatively, position(s) and orientations/directions of the light source or light emitting elements therein can be represented in a device-specific coordinate system and/or - at any given time - can be spatially transformed to be equivalently represented in the world spatial coordinate system. In some operational scenarios, spatial relationships between the light source and each of the event-based sensors and/or between the event-based sensors may be represented as defined sensor offsets as illustrated in FIG. 3A.

After deployment in the field, the 3D sensing system can perform a device geometric information calibration procedure (e.g., automatically, with no or little manual input, with no or little user intervention, etc.) to determine, verify or re-generate/re-compute some or all of the geometric information on an ongoing basis. In various operational scenarios, the geometric information calibration procedure can be performed at runtime or in the field by the 3D sensing system at a plurality of time points, on-demand, on a schedule, periodically, continuously, every few minutes or shorter, daily, hourly, weekly, etc.

The geometric information determined or configured for (or known to) the 3D sensing system may include, but is not necessarily limited to only, some or all of: individual positions and directions (of a geometric or optical center or axis) of the first event-based 3D sensor, the light source and/or second event-based 3D sensor, spatial relationships between and/or among the event-based 3D sensors and the light source, spatial relationships or spatial transformations (e.g., rotation, translation, scaling, etc.) between different device-specific coordinate systems, positions, orientations, defined offsets, spatial relationships or spatial transformations in relation to the world coordinate system or in relation to a global positioning system, etc.

The 3D calibration procedure can be invoked or performed to determine or maintain relatively accurate and up-to-date (device) geometric information of the event-based sensors and the light source on an ongoing basis such as every few minutes or shorter, every hours, daily, weekly, etc.

### 3.2. HYBRID SENSING OPERATIONS

The 3D sensing system as illustrated in FIG. 2, FIG. 3A, and FIG. 3B may be implemented to support hybrid 3D sensing by supplementing stereo (triangulation-based) 3D sensing operations with an active illuminator to enable TOF 3D sensing operations.

Both imagers/detectors of the 3D sensing system can be used to concurrently perceive or monitor the time of arrival of a discrete scan position as well as a projected pixel position triangulation-based 3D sensing. More specifically, the 3D sensing system operates its light source (e.g., 210 of FIG. 2, a laser light source, a non-laser light source, etc.) to actively illuminate the physical environment or visual scene. For a light pulse emitted by the light source, each of the two event-based 3D sensor or Geiger-mode detector (e.g., 220, etc.) in the hybrid 3D sensing system can act as an imager to concurrently perceive or measure (1) the time of arrival of reflected light of the light pulse to be used for TOF 3D sensing, and (2) a discrete scan position (e.g., a sensor-element position, a projected pixel position, in the array of sensor elements, etc.) to be used for triangulation.

In some operational scenarios, one of the two event-based 3D sensor or Geiger-mode detectors is relatively closely collocated to the light source to reduce parallax and optical path differences between that sensor/detector and the light source. In some other operational scenarios, the two event-based 3D sensor or Geiger-mode detectors are located with (e.g., approximately, etc.) equal distances to the light source. Additionally, optionally or alternatively, (e.g., symmetric, non-symmetric, co-located, non-co-located, etc.) spatial arrangements other than the two foregoing examples may be used to place the two event-based 3D sensor or Geiger-mode detectors in relation to the light source.

Any of these light source positions in relation to the event-based 3D sensor or Geiger-mode detectors may be adopted in operation or used to perform active and/or passive triangulation between each of the two event-based 3D sensor or Geiger-mode detectors and the light source. As used herein, active triangulation refers to triangulation between a camera/sensor/detector and a light source, whereas passive triangulation refers to triangulation between two cameras/sensors/detectors located at different spatial positions and/or at different directions/orientations.

Relatively close-range or relatively long-range triangulation may be performed between an event-based 3D sensor or Geiger-mode detector as described herein and the light source. Sometimes close range detection may be used. May be done in some operational scenarios. Most cases for longer ranges. Spatial locations of the light sources and the event-based 3D sensors or Geiger-mode detectors may be configured to generate relatively significant or large parallaxes - which facilitate or help determine depths and/or 3D coordinate values relatively accurately - between corresponding pixels depicting the same 3D point in the physical environment or visual scene. can be beneficial for detecting depth. The light source may be configured to emit very long (spatial) range light pulses to generate 3D sampling points spreading in different spatial depths or angles in the physical environment or visual scene. As a result, pedestrians, cars or other objects located in a relatively large spatial range (e.g., up to 150 meters, up to 300 meters, etc.) may be detected with the 3D sensing system as described herein.

Individual sensor elements in each of two event-based 3D sensor or Geiger-mode detectors can be used (e.g., with local compute logics or ICs, etc.) to detect and record the time of arrival of a light reflection from a (reflective) spatial location of a reflective object as well as the unique pixel (or sensor element) position of the sensor element receiving the light reflection. The pixel or sensor element position represents a projected position of a 3D position/location that receives an illumination light portion emitted from the light source and that generates the light reflection from the illumination light portion. A pair of unique pixel or sensor element positions of a pair of sensor elements respectively on the two event-based 3D sensor or Geiger-mode detectors can be used to perform triangulation using pixel-level stereo-vision processing techniques to determine the spatial location of the reflective object in the physical environment.

### 3.3. STRUCTURED LIGHT

The 3D sensing system can be implemented to further support structured light based 3D sensing. At a given time interval in operation, the light source may illuminate the physical environment or visual scene in a specific illumination pattern with pulsed light to support or facilitate direct time-of-flight measurements by individual sensors or sensor elements in the event-based 3D sensors (which may also be referred to as Geiger-mode detectors).

Simultaneously or concurrently, the illumination pattern used to support or facilitate the time-of-flight measurements can also be used for active and/or passive triangulation based at least in part on the geometric information such as relative (e.g., mounting, etc.) positions and/or directions of the light source (or emitter) and the respective sensor arrays of the event-based 3D sensors.

In a first example, a sequential scanning approach may be implemented with illumination light emitted by the light source (e.g., a laser emitter, etc.). Discrete scanning positions corresponding to discrete illumination portions can be sampled sequentially in a spatial pattern. This results in just one reflection at a time that is detected by the event-based 3D sensor or Geiger-mode detectors, significantly simplifying data association operations - e.g., using local or non-local compute resources to solve data association problems of identifying corresponding pixel locations or of correlating reflections detected by sensor-elements in relation to a given light pulse directed at a given 3D position. This approach may reduce the temporal resolution of the overall 3D sensing with the physical environment or visual scene as only one scan position at a time is illuminated and/or considered.

In a second example, a global or concurrent illumination approach may be implemented with illumination light emitted by the light source (e.g., a laser emitter, etc.). The (e.g., 100%, 120%, 90%, substantially, etc.) entire visual scene to be probed by 3D sensing operations of the 3D sensing system may be illuminated at once. Pulse and/or spatial codification can be implemented or used by the light source to code the illumination light into a specific illumination (e.g., spatial, spatially coded, etc.) pattern so that the event-based 3D sensor or Geiger-mode detectors can effectively solve the data association problems, for example, based at least in part on comparing the specific illumination pattern with a reflected (e.g., distorted, etc.) light pattern accumulated from - or formed by - light reflections received over a given relatively short time period (depending on the largest object distance to be probed) following the start of the specific illumination pattern. This approach can be used to support a relatively high temporal resolution (e.g., high frame rates, high overall scene-level scanning rate, etc.) with a relatively high level of system complexity. Generating a global scan pattern with temporal and/or spatial coding may be implemented with specific hardware operating with the light source. The data association problems may be solved using local or non-local compute resources. The solutions of the data association problems such as correspondences or correlated measurement data can be used for triangulation.

### 3.4. COMPRESSING SENSING DATA

As noted, the 3D sensing system can be implemented to combine multiple types of 3D sensing techniques to probe, measure or determine 3D positions of physical objects present in a physical environment or visual scene. Some or all of these physical objects in the physical environment or visual scene can be illuminated with temporally and/or spatially coded light pulses generated in an unstructured or structured spatial pattern by an active illuminator such as a light source (e.g., 210 of FIG. 2, etc.). The 3D sensing techniques implemented by the 3D sensing system may include time-of-flight based 3D sensing techniques as well as triangulation based 3D sensing techniques.

Instead of generating separate or standalone data flows of relatively large data volume or rate for each different 3D sensing technique, the 3D sensing system as described herein can be implemented to correlate and compress 3D sensing data such as time-of-flight measurements and triangulation related sensing data at a detector or sensor element level.

For example, at a specific time point along a common time line accessible to or referenced by components/devices of the 3D sensing system, a light pulse (e.g., a 5 ns light pulse, a 10 ns light pulse, a shorter or longer light pulse, a portion of the overall structured light, etc.) is emitted by the light source - as illustrated in FIG. 3B - and directed to a 3D position (denoted as P) on a reflection surface of a physical object (not shown) in the physical environment or visual scene. Here, the common time line may be based on a common reference clock signal/source in the 3D sensing system referenced - or used to represent specific time points - by the light source and the Geiger-mode detectors.

Subsequent to the specific (light pulse emission) time point, at a first subsequent time point along the same common time line, a first sensor element at a first sensor element (or pixel) position (denoted as Pi) of the sensor array of the first event-based 3D sensor or Geiger-mode detector detects - or registers an event of detecting through time gating - a first portion of reflected light (one of the light reflections in FIG. 3B intersecting a sensor element at point Pi) from the 3D position P caused by a first portion of the light pulse emitted by the light source and incident on the 3D position P. The first time point may represent, or may be determined to be, the very first light detection by the first sensor element after the specific time at which the light pulse was emitted.

Also, subsequent to the specific time, at a second time point along the same common time line, a second sensor element at a second sensor element (or pixel) position (denoted as P₂) of the sensor array of the second event-based 3D sensor or Geiger-mode detector detects - or registers an event of detecting through time gating - a second portion of the reflected light (the other of the light reflections in FIG. 3B intersecting a sensor element at point P₂) from the 3D position P caused by a second portion of the light pulse emitted by the light source and incident on the 3D position P. The second time point may represent, or may be determined to be, the very first light detection by the second sensor element after the specific time at which the light pulse was emitted.

The 3D sensing system or a local or global compute logic or IC or processor can use the specific time point, the first time point and the second time point to determine that all these time points corresponding or relating to the same light pulse emitted earlier by the light source. For example, the 3D position may be located relatively far as compared with the spatial displacements/distances or sensor offsets between any two of the light source and the event-based 3D sensors or Geiger-mode detectors. As a result, the reflected light from the same 3D position at the same time caused by an incident light pulse may arrive at the two event-based 3D sensors or Geiger-mode detectors within a relatively short time window - detectable through time gating operations - as compared with a time of flight from the light source to the 3D position and from the 3D position to any of the two event-based 3D sensors or Geiger-mode detectors.

In some operational scenarios, the 3D sensing system may use the specific time point, the first time point and the second time point to compute the time difference between the first time point and the second time point and determine whether the time difference is within a specific (e.g., absolute, 1 nanosecond, relative, 1% of an individual or average time-of-flight measurement, moving, etc.) time window in relation to the specific time point at which the light pulse was emitted.

In response to determining that the time difference is within the specific time window and/or that some or all of the 3D position and/or directions/orientations of the first and second senor elements correspond to or intersect with a specific illuminated point (e.g., the 3D position P, within a specific error threshold of P, within a tolerance of P, within a relatively small neighborhood of P, etc.) by the light pulse, the 3D sensing system determines that the specific time point, the first time point and the second time point correspond or relate to the same light pulse.

Hence, the 3D sensing system or a local or global compute logic or IC or processor can apply time gating operations to timing information relating to emitting the light pulse and receiving reflections of the light pulse to determine that all these time points corresponding or relating to the same light pulse.

Timing information collected for the light pulse and its reflections through time gating operations may be used by first local compute ICs attendant to the sensor elements involved and/or non-local compute resources in the 3D sensing system as input to TOF-based 3D sensing methods/algorithms to determine or compute the position P, for example, as a first set of specific coordinate values in the world coordinate system.

Concurrently, sensor element (or pixel) positional information may be used by second local compute ICs attendant to the sensor elements involved and/or non-local compute resources in the 3D sensing system as input to (instantaneous) triangulation-based 3D sensing methods/algorithms to determine or compute the position P, for example, as a second set of specific coordinate values in the world coordinate system.

The TOF-based methods/algorithms can be performed in parallel with the triangulation-based methods/algorithms. A final, consolidated or filtered set of specific coordinate values in the world coordinate system may be obtained for the position P based at least in part on the first and second sets of specific coordinate values, for example, through weighted or unweighted averaging.

In some operational scenarios, the timing information and/or the sensor element (or pixel) positional information can be used together in solving a single constrained optimization problem to determine, estimate or predict relatively optimized or accurate (3D) locational information such as coordinate values of the position P. For example, the timing information may be used as constraints, initial conditions, upper/lower limits, etc., in a triangulation-based method or algorithm using the positional information as input, for the purpose of improving precision or accuracy in the solution or output generated by the triangulation-based method or algorithm using the positional information. Time of flight provides distance estimations of the position P, which can serve as constraints or initial conditions to the stereo correspondence problem to be solved in triangulation. As a result, the search space for optimized values of the position P is significantly narrowed. Hence, the use of ToF data in the triangulation helps find the (e.g., globally, etc.) most optimized or precise solution (versus one of several possible locally optimized solutions), as the most optimized solution is known to be around where is indicated by the ToF data.

In addition, the TOF-based and triangulation-based methods/algorithms in connection with the sensor elements located at P₁ and P₂ and/or averaging/consolidation/filtering operations performed on computed coordinate values of the position P can be performed in parallel with TOF-based and triangulation-based methods/algorithms in connection with other sensor elements not located at P₁ and P₂ and/or averaging/consolidation/filtering operations performed on computed coordinate values of other positions not at P.

Hence, the computations and/or averaging/consolidation/filtering operations in connection with the sensor elements at P₁ and P₂ and/or the position P can be performed by the local and/or non-local compute ICs asynchronously with other computations and/or other averaging/consolidation/filtering operations in connection with other sensor elements not at P₁ or P₂ and/or other positions not at P performed by other local and/or non-local compute ICs. There is no need for 3D sensing operations such as the computations or operations in connection with the sensor elements located at P₁ and P₂ and the position P to wait for other 3D sensing operations in connection with other sensor elements or positions to occur or complete.

As a result, time latency can be greatly reduced in hybrid 3D sensing, as a specific spatial position of a physical object in the physical environment can be readily determined and computed as soon as input TOF and triangulation data such as the specific time of the light pulse and first and second times of reflections of the light pulse and/or the sensor element positions P₁ and P₂ are acquired, without waiting for acquisition of all other TOF and triangulation data. 3D sensing results can be relatively precisely because relatively precise locations of the sensor elements are used for triangulation computations and relatively precise times of the light pulse or reflections are obtained through time gating and used in TOF computations. The accuracy or precision of the object position can be further improved by integrating or consolidating coordinate values of the object position from different types of 3D sensing techniques/modalities such as TOF and triangulation. An additional benefit is that these computational results are filtered or combined at the sensor element level. Much of the raw sensor data or intermediate results need not to be outputted by the 3D sensing system and only the filtered or combined results are outputted, thereby achieving a relatively high data compression rate.

### 3.5. EXAMPLE ADVANTAGES

Under other approaches that do not implement techniques as described herein, triangulation such stereo triangulation may be performed using two full frames - as opposed to specific sensor elements or pixels without needing to have two full frames of images under techniques as described herein - of images captured from two different perspectives of a physical environment or visual scene. Relatively complex computer vision (or computer-vision based object recognition/detection or feature point extraction) techniques are then applied to analyze pixel values in the images to establish correspondence or correlation relationships between corresponding pixels in the mages. For example, specific semantic features may be determined from the images. Specific feature points (e.g. image corners, SIFT, SURF, SuperGlue applied to significant image points such as SuperPoints), or sematic features (e.g., head lights, specific points of a vehicle, specific points of facial or anatomic features of a pedestrian, specific features of a building, tree, etc.) and/or image textural information may be determined and used in relatively computational-intensive optimization operations. Correspondence or correlation relationships (e.g., spatial displacements, spatial rotations, etc.) between other corresponding points in the images other than the above-mentioned feature points may be further determined or identified using relatively computational-intensive optimization operations. As a result, while the images may be captured from the same physical environment or visual scene, pixel level correspondence or correlation relationships are difficult and time consuming with relatively large errors, many computational overheads and latencies to establish under these other approaches.

In contrast, under techniques as described herein, there is no need to have full frames of images as input or starting point to establish correspondence or correlation relationships between corresponding pixels in the images. Also, there is no need to apply computer vision techniques to discover corresponding visual or image features and/or to identify specific corresponding feature points in these visual or image features. Further, there is no need to apply computationally intensive optimization problem solving to determine pixel-level correspondences or correlations.

Under the techniques as described herein, local and/or non-local compute logics/ICs/processors in the 3D sensing system can accurately and directly - as compared with the other approaches performing computationally intensive computer vision techniques on images - identify, determine or establish sensor-element or pixel-level correspondences or correlations using time points connected with an illumination light pulse and/or an illumination pattern and/or time-of flight measurements made by individual sensor elements.

For example, specific time points in connection with an emission of a light pulse from the light source and detections of the light pulse's reflections by two sensor elements with respective positions/directions on the two event-based 3D sensor or Geiger-mode detectors can be relatively accurately and directly captured or measured by way of the same common time line accessible to or referenced by components/devices in the 3D sensing system and used to detect or determine the correspondence between the detections and a 3D position in the physical environment or visual scene from which the (two) reflections are received or detected respectively by the two sensor elements.

While 3D sensing operations as described herein are applied to 3D sensing data generated with the (pair of) sensor elements, concurrently, the same 3D sensing operations can be applied to other 3D sensing data generated with any other pair(s) of sensor elements in the two event-based 3D sensor or Geiger-mode detectors.

For example, at the same time while the 3D sensing operations are performed with the two sensor elements previously mentioned, second specific time points in connection with the emission of the light pulse from the light source and second detections of the light pulse's second reflections by two second sensor elements with respective second positions/directions on the two event-based 3D sensor or Geiger-mode detectors can be concurrently captured or measured by way of the same common time line accessible to or referenced by components/devices in the 3D sensing system and concurrently used to detect or determine the correspondence between the second detections and a second 3D position in the physical environment or visual scene from which the (two) second reflections are received or detected respectively by the two second sensor elements.

Hence, in various operational scenarios, 3D sensing operations as described herein can be relatively flexibly performed at sensor-element level individually in parallel, in serial, partly in parallel, partly in series, independently, asynchronously, synchronously, etc. These 3D sensing operations have no dependence on receiving full-frame or full-block image data as input data. Each determination/computation of correspondences or correlations for a respective pair of sensor elements can be performed immediately once time points or time-of-flight measurements are known or received for the pair of sensor elements without waiting for other time points or time-of-flight measurements for any other pair of sensor elements.

Due to the use of event-based Geiger mode detectors, compression of 3D sensing data including input and/or output data to various components/devices in or outside of the 3D sensing system is inherent under hybrid sensing techniques as described herein. Under other approaches, many passive stereo-image based 3D sensing systems suffer from many processing bottlenecks as full frames of pixel information are to be transferred and processed. In contrast, under the techniques as described herein, event-based processing significantly reduces relatively large amounts of raw sensor data through sensor data refinement and filtering at the sensor element level. This simplifies solving the data association or stereo correspondence problems by one or more orders of magnitudes. In the meantime, time-of-flight information as perceived by or measured with each sensor element (e.g., in a pair of sensor elements detecting correlated light reflections of a light pulse emitted by the light source, etc.) can be individually or collectively used to constrain the data association or stereo correspondence problems. The time-of-flight information along with positional/directional information of the sensor element or pixel can be used as initial conditions, or constraints to solve the data association or stereo correspondence problems. The time-of-flight based initial conditions or constraints can be used to significantly reduce the size of solution spaces to be searched in solving the data association or stereo correspondence problems and/or significantly increase reliability and accuracy in the (e.g., globally optimized, etc.) solutions of these (constrained refinement) problems.

### 3.6. FULL IMAGE ACQUISITION

In some operational scenarios, the first and second event-based 3D sensors or Geiger-mode detectors may be used to generate 3D sensing data to be used as input for other 3D sensing techniques/modalities. For example, these sensors/detectors may be used as imagers to generate full-frame stereoscopic images or full-frame images of different camera (or eye) views. These full-frame images can be used by 3D sensing techniques/modalities dependent on receiving and analyzing full-frame images to determine or estimate (pixel) depths based on pixel disparity information of correlated pixels - or pixels having stereo correspondence relationships; pixels relating to the same point of a physical object in the scene depicted in the images - in the full-frame images of different camera views.

For the purpose of illustration only, the first and second event-based 3D sensors or Geiger-mode detectors may be identically or similarly made and include the same or comparable number of sensor elements arranged in an analogous or identical image plane. Sensor or pixel data generated by way of these sensor elements may be contained, represented or coded in an identical or similar image frame with the same or similar number of rows and columns of scan elements or pixels in each direction of the image frame. Sensor (or scan) elements compose images or image frames using the pixel data. Sensor data collected with individual sensor elements such as light intensities can be transformed or mapped - e.g., with image signal processor based at least in part on sensor/detector/camera/lens parameters associated with the imagers - to output pixel data or image information in the images or image frames.

In these operational scenarios, the arrays of sensor elements in the first and second event-based 3D sensors or Geiger-mode detectors may be used to generate images in comparable frames (identified by respective image frame indexes corresponding to specific time points or intervals during which the image or pixel data in a frame is collected) with comparable spatial resolutions from ambient light and/or active illumination in the physical environment or visual scene.

Additionally, optionally or alternatively, in these operational scenarios, the arrays of sensor elements in the first and second event-based 3D sensors or Geiger-mode detectors may be used to generate event detection data (e.g., a binary value indicating whether an event is detected, a time-of-flight measurement, light pulse and reflection timing information, directions of cells containing the sensor elements, etc.) represented in comparable frames or event data containers (identified by respective event data frame/container indexes corresponding to specific time points or intervals during which the event data in a frame is collected) with comparable spatial resolutions from active illumination in the physical environment or visual scene.

The image frames and/or event data frames/container that carry or contain image data and/or event detection data generated by the first and second event-based 3D sensors or Geiger-mode detectors can be represented in a first detector-specific coordinate system and a second detector-specific coordinate system. As illustrated in FIG. 3B, the first detector-specific coordinate system may be used to represent scan element or pixel positions in an image frame and/or event data frame/container that carry or contain image data and/or event detection generated during a specific time interval by the first event-based 3D sensor or Geiger-mode detector, and may be a Cartesian coordinate system (e.g., stationary with the first event-based 3D sensor or Geiger-mode detector, etc.) with an origin or reference Oi and Xi, Yi, and Zi coordinates/axes. Similarly, the second detector-specific coordinate system may be used to represent scan element or pixel positions in an image frame and/or event data frame/container that carry or contain image data and/or event detection generated during a specific time interval by the second event-based 3D sensor or Geiger-mode detector, and may be a Cartesian coordinate system (e.g., stationary with the second event-based 3D sensor or Geiger-mode detector, etc.) with an origin or reference O₂ and X₂, Y₂, and Z₂ coordinates/axes.

The first and second event-based 3D sensors or Geiger-mode detectors are located at different spatial positions and/or different spatial directions in the 3D sensing system. For example, principal/reference points (passed through by optical axes) in the image planes of the first and second event-based 3D sensors or Geiger-mode detectors may be represented by different sets of spatial coordinate values in a world spatial coordinate system (e.g., a Cartesian coordinate system with an origin or reference O_{w} and X_{w}, Y_{w}, and Z_{w} coordinates/axes, stationary with the Earth, etc.) used to represent different spatial positions in a 3D space such as the physical environment or visual scene in the present example. Additionally, optionally or alternatively, in various operational scenarios, optical axes of the first and second event-based 3D sensors or Geiger-mode detectors may or may not be along the same direction; the image planes of the first and second event-based 3D sensors or Geiger-mode detectors may or may not be co-planar.

### 3.7. SAMPLING AND CALIBRATION

The light source may be controlled by specific hardware such as a light source controller to generate sequential and global illuminations. Texture, structure, spatial and/or temporal patterns for active illumination by the light source may be generated or controlled by the light source controller implementing temporal and spatial modulation logics.

Example illumination patterns may include, but are not necessarily limited to only, pseudo random illumination patterns. Unique identifications of (illuminated) spots/features in an illumination pattern may be identifiable regardless of their actual locations in a physical environment illuminated by the light source.

In some operational scenarios, an entire illumination pattern may be implemented with or in a relatively short time sequence of light pulses with modulated spatial positions. The light source controller may include pulse generation logic on light emitters in the light source. The illumination patterns such as pseudo random illumination patterns may be specifically configured by the 3D sensing system or the light source controller therein and shared/used by the sensors/detectors for light reflection event detection.

An illumination pattern generated by the light source can include sparsely or densely populated or sampled illuminated portions. Sensor elements that make up a sensor element array of an event-based 3D sensor or Geiger-mode detector can also be implemented to sample different angles in a solid angle (e.g., spherical, 360 degree, 4 pi, front, back, side, etc.) to the physical environment or visual scene.

In some operational scenarios, the (angular) sampling of the event-based 3D sensor or Geiger-mode detector or the sensor elements therein may be matched to the (illumination) sampling by way of a spatial distribution of the illuminated portions of the illumination pattern generated by the light source, for example, with a (e.g., closely, approximately, etc.) 1:1 sampling ratio.

In some operational scenarios, the (illumination) sampling of the light source may be more or denser than the (angular) sampling of the event-based 3D sensor or Geiger-mode detector. This may be used to ensure that a relatively large number of physical objects or 3D positions thereof in the physical environment or visual scene can be probed, sensed or detected to the full capability or temporal/spatial resolution of the event-based 3D sensor or Geiger-mode detector.

In some operational scenarios, the (illumination) sampling of the light source may be less or sparser than the (angular) sampling of the event-based 3D sensor or Geiger-mode detector. This may be used to derive a relatively small number of (reference) 3D positions on reflective surfaces of a few physical objects in the physical environment or visual scene.

The relatively sparse illumination can help create reference 3D information that is less dense than the actual spatial resolution of the sensor element arrays of the event-based 3D sensors or Geiger-mode detectors. These reference 3D positions can be used or established as 3D seed points to serve as fiducial marks with known or relatively accurate 3D coordinates for further deducing or deriving other 3D positions (not actively illuminated) whose projected positions are captured as pixel data collected in passive or ambient-light-based stereo images by the event-based 3D sensors or Geiger-mode detectors.

Under other approaches, reference 3D positions may be estimated or predicted with relatively large errors using image features or feature points thereof approximately identified or detected by applying relatively complex computer vision techniques to full frames or full blocks of stereo images.

In contrast, under techniques as described herein, relatively accurate reference 3D positions or seed points can be derived with little latency from time-of-flight measurements relatively accurately made along a common time line and triangulation based on these relatively accurate sensor level measurements. These reference 3D positions or seed points can be relatively reliably used for a more complete reconstruction (e.g., interpolation, extrapolation, further image textual data analysis, etc.) of other 3D positions corresponding to other pixels in the passive or ambient-light-based stereo images.

The relative positioning or offset values in geometric information of the light source and/or the event-based 3D sensors or Geiger-mode detectors or sensor elements or sensor arrays therein with respect to one another in the 3D sensing system may be determined initially with a static "factory" calibration.

During the use or field operations, the relative positioning of the light source and detectors can change to render the factory calibration inaccurate, especially if any of these components are not attached to or mounted through a relatively stable or durable rigid construction.

In some operational scenarios, 3D sensing data may be used to perform continuous or discrete (e.g., online, offline, runtime, in the field, by an end user, in an end user vehicle system, etc.) calibration of configuration parameters of the light source and/or the event-based 3D sensors or Geiger-mode detectors or sensor elements or sensor arrays therein to generate up-to-date calibrated geometric information including but not limited to the relative positioning or offset values in geometric information of the light source and/or the event-based 3D sensors or Geiger-mode detectors or sensor elements or sensor arrays therein with respect to one another, specific camera distortion parameters associated with each of the sensor arrays, specific directions/positions of image plans and/or optical axes, reference positions/directions, sensor/detector/camera/lens parameters, etc. As a calibration procedure, a sufficiently large number of 3D reference positions and/or seed points acquired with specific illumination patterns may be (e.g., concurrently, simultaneously, etc.) sampled, acquired or used in a system of equations in which some or all geometric information of the 3D sensing system such as sensor/camera/lens parameters may be treated as variables or unknowns to be solved with the system of equations. The calibration procedure can be repeatedly (e.g., periodically, on demand, etc.) invoked or performed after the 3D sensing system left factory and operates in the field.

The sensor/detector arrays in the event-based 3D sensors or Geiger-mode detectors may function as active and passive triangulation stereo sensors that have continuous access to the time-of-flight information acquired with active illumination from the light source. Based at least in part on the time-of-flight information, unforeseen changes to rotation and/or translation between the event-based 3D sensors or Geiger-mode detector and/or the light source can be compensated by re-calculations of extrinsic parameters such as the relative positioning or offset values in geometric information of the light source and/or the event-based 3D sensors or Geiger-mode detectors or sensor elements or sensor arrays therein with respect to one another.

### 4.0. EXAMPLE PROCESS FLOWS

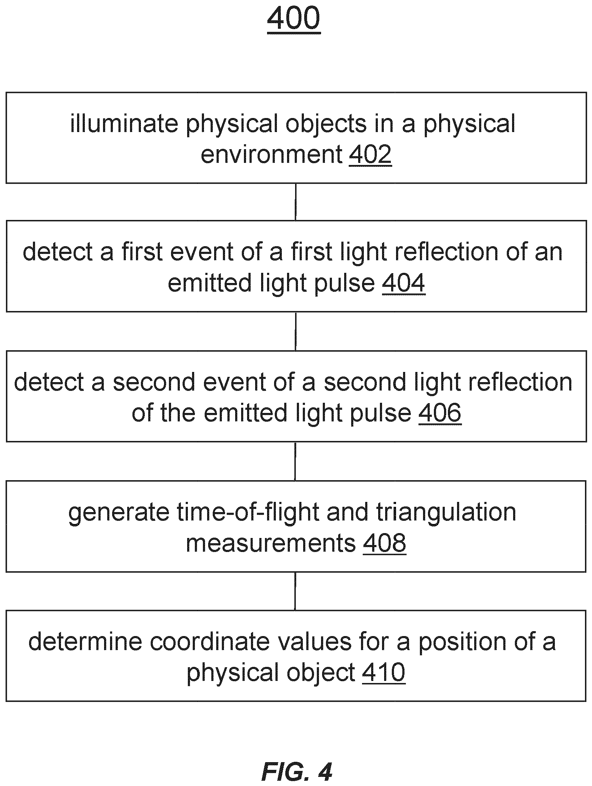

FIG. 4 illustrates an example process flow 400 according to an embodiment. In some embodiments, one or more computing devices or components may perform this process flow 400. In block 402, a system as described herein illuminates, by a light source located at a specific spatial location, one or more physical objects in a physical environment.

In block 404, the system detects, by a first sensor element of a first light detector at a first spatial location, a first event of a first light reflection from an exterior surface position of a specific physical object in the one or more physical object illuminated by the light source.

In block 406, the system detects, by a second sensor element of a second light detector at a second spatial location, a second event of a second light reflection from the exterior surface position of the specific physical object illuminated by the light source.

In block 408, the system generates, based at least in part on the first and second events and the first and second spatial locations, time-of-flight measurements and triangulation measurements.

In block 410, the system determines, based at least in part on the time-of-flight measurements and triangulation measurements, a set of specific spatial coordinate values for the exterior surface position of the specific physical object.

In an embodiment, the light source emits a series of light pulses into the physical environment; both the first light reflection and the second light reflection are triggered by a same light pulse in the series of light pulses that illuminates the specific physical object.

In an embodiment, the first event of the first light detection is isolated through first time gating operations performed on a first sensor data signal generated by the first sensor element; the second event of the second light detection is isolated through second time gating operations performed on a second sensor data signal generated by the second sensor element.

In an embodiment, the first and second spatial locations of the first and second detectors relate to the specific spatial location of the light source with defined spatial offsets in a three-dimensional (3D) sensing device; device geometric information of the 3D sensing device is continuously re-calibrated in field operations with reference 3D positions established through 3D sensing operations.

In an embodiment, the first light detector includes a first array of sensor elements having a third sensor element in addition to the first sensor element; the second light detector includes a second array of sensor elements having a fourth sensor element in addition to the second sensor element; the third and fourth sensor elements concurrently detect third and fourth events of light reflections while the first and second sensor elements detect the first and second events; second time-of-flight measurements and second triangulation measurements generated with the third and fourth sensor elements are concurrently being used to determine a second set of specific spatial coordinate values for a second exterior surface position of one of the one or more physical objects while the time-of-flight measurements and triangulation measurements generated with the first and second sensor elements are being used to determine the set of specific spatial coordinate values for the exterior surface position of the specific physical object.

In an embodiment, the first and second detectors are used to capture ambient light to generate full-frame images.

In an embodiment, at least one of the first sensor element or the second sensor element is a Geiger-mode light sensor.

In an embodiment, a computing device is configured to perform any of the foregoing methods. In an embodiment, an apparatus comprises a processor and is configured to perform any of the foregoing methods. In an embodiment, a non-transitory computer readable storage medium, storing software instructions, which when executed by one or more processors cause performance of any of the foregoing methods.

In an embodiment, a computing device comprising one or more processors and one or more storage media storing a set of instructions which, when executed by the one or more processors, cause performance of any of the foregoing methods.

Other examples of these and other embodiments are found throughout this disclosure. Note that, although separate embodiments are discussed herein, any combination of embodiments and/or partial embodiments discussed herein may be combined to form further embodiments.

### 5.0. IMPLEMENTATION MECHANISM-HARDWARE OVERVIEW

According to one embodiment, the techniques described herein are implemented by one or more special-purpose computing devices. The special-purpose computing devices may be desktop computer systems, portable computer systems, handheld devices, smartphones, media devices, gaming consoles, networking devices, or any other device that incorporates hard-wired and/or program logic to implement the techniques. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques.

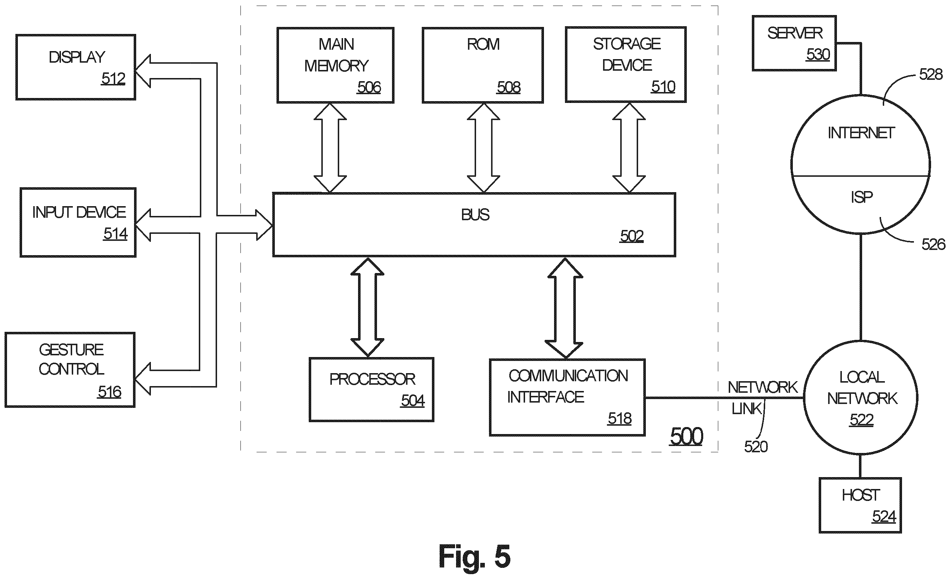

FIG. 5 is a block diagram that illustrates a computer system 500 utilized in implementing the above-described techniques, according to an embodiment. Computer system 500 may be, for example, a desktop computing device, laptop computing device, tablet, smartphone, server appliance, computing main image, multimedia device, handheld device, networking apparatus, or any other suitable device.

Computer system 500 includes one or more busses 502 or other communication mechanism for communicating information, and one or more hardware processors 504 coupled with busses 502 for processing information. Hardware processors 504 may be, for example, a general purpose microprocessor. Busses 502 may include various internal and/or external components, including, without limitation, internal processor or memory busses, a Serial ATA bus, a PCI Express bus, a Universal Serial Bus, a HyperTransport bus, an Infiniband bus, and/or any other suitable wired or wireless communication channel.

Computer system 500 also includes a main memory 506, such as a random access memory (RAM) or other dynamic or volatile storage device, coupled to bus 502 for storing information and instructions to be executed by processor 504. Main memory 506 also may be used for storing temporary variables or other intermediate information during execution of instructions to be executed by processor 504. Such instructions, when stored in non-transitory storage media accessible to processor 504, render computer system 500 into a special-purpose machine that is customized to perform the operations specified in the instructions.

Computer system 500 further includes one or more read only memories (ROM) 508 or other static storage devices coupled to bus 502 for storing static information and instructions for processor 504. One or more storage devices 510, such as a solid-state drive (SSD), magnetic disk, optical disk, or other suitable non-volatile storage device, is provided and coupled to bus 502 for storing information and instructions.

Computer system 500 may be coupled via bus 502 to one or more displays 512 for presenting information to a computer user. For instance, computer system 500 may be connected via a High-Definition Multimedia Interface (HDMI) cable or other suitable cabling to a Liquid Crystal Display (LCD) monitor, and/or via a wireless connection such as peer-to-peer Wi-Fi Direct connection to a Light-Emitting Diode (LED) television. Other examples of suitable types of displays 512 may include, without limitation, plasma display devices, projectors, cathode ray tube (CRT) monitors, electronic paper, virtual reality headsets, braille terminal, and/or any other suitable device for outputting information to a computer user. In an embodiment, any suitable type of output device, such as, for instance, an audio speaker or printer, may be utilized instead of a display 512.

In an embodiment, output to display 512 may be accelerated by one or more graphics processing unit (GPUs) in computer system 500. A GPU may be, for example, a highly parallelized, multi-core floating point processing unit highly optimized to perform computing operations related to the display of graphics data, 3D data, and/or multimedia. In addition to computing image and/or video data directly for output to display 512, a GPU may also be used to render imagery or other video data off-screen, and read that data back into a program for off-screen image processing with very high performance. Various other computing tasks may be off-loaded from the processor 504 to the GPU.

One or more input devices 514 are coupled to bus 502 for communicating information and command selections to processor 504. One example type of user input device 514 is gesture control 516 for communicating direction information and command selections to processor 504. Yet other examples of suitable input devices 514 include a touch-screen panel affixed to a display 512, cameras, microphones, accelerometers, motion detectors, and/or other sensors. In an embodiment, a network-based input device 514 may be utilized. In such an embodiment, user input and/or other information or commands may be relayed via routers and/or switches on a Local Area Network (LAN) or other suitable shared network, or via a peer-to-peer network, from the input device 514 to a network link 520 on the computer system 500.

A computer system 500 may implement techniques described herein using customized hard-wired logic, one or more ASICs or FPGAs, firmware and/or program logic which in combination with the computer system causes or programs computer system 500 to be a special-purpose machine. According to one embodiment, the techniques herein are performed by computer system 500 in response to processor 504 executing one or more sequences of one or more instructions contained in main memory 506. Such instructions may be read into main memory 506 from another storage medium, such as storage device 510. Execution of the sequences of instructions contained in main memory 506 causes processor 504 to perform the process steps described herein. In alternative embodiments, hard-wired circuitry may be used in place of or in combination with software instructions.

The term "storage media" as used herein refers to any non-transitory media that store data and/or instructions that cause a machine to operate in a specific fashion. Such storage media may comprise non-volatile media and/or volatile media. Non-volatile media includes, for example, optical or magnetic disks, such as storage device 510. Volatile media includes dynamic memory, such as main memory 506. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 502. Transmission media can also take the form of acoustic or light waves, such as those generated during radio-wave and infra-red data communications.

Various forms of media may be involved in carrying one or more sequences of one or more instructions to processor 504 for execution. For example, the instructions may initially be carried on a magnetic disk or solid state drive of a remote computer. The remote computer can load the instructions into its dynamic memory and use a modem to send the instructions over a network, such as a cable network or cellular network, as modulated signals. A modem local to computer system 500 can receive the data on the network and demodulate the signal to decode the transmitted instructions. Appropriate circuitry can then place the data on bus 502. Bus 502 carries the data to main memory 505, from which processor 504 retrieves and executes the instructions. The instructions received by main memory 506 may optionally be stored on storage device 510 either before or after execution by processor 504.

A computer system 500 may also include, in an embodiment, one or more communication interfaces 518 coupled to bus 502. A communication interface 518 provides a data communication coupling, typically two-way, to a network link 520 that is connected to a local network 522. For example, a communication interface 518 may be an integrated services digital network (ISDN) card, cable modem, satellite modem, or a modem to provide a data communication connection to a corresponding type of telephone line. As another example, the one or more communication interfaces 518 may include a local area network (LAN) card to provide a data communication connection to a compatible LAN. As yet another example, the one or more communication interfaces 518 may include a wireless network interface controller, such as a 802.11-based controller, Bluetooth controller, Long Term Evolution (LTE) modem, and/or other types of wireless interfaces. In any such implementation, communication interface 518 sends and receives electrical, electromagnetic, or optical signals that carry digital data streams representing various types of information.

Network link 520 typically provides data communication through one or more networks to other data devices. For example, network link 520 may provide a connection through local network 522 to a host computer 524 or to data equipment operated by a Service Provider 526. Service Provider 526, which may for example be an Internet Service Provider (ISP), in turn provides data communication services through a wide area network, such as the world wide packet data communication network now commonly referred to as the "Internet" 528. Local network 522 and Internet 528 both use electrical, electromagnetic or optical signals that carry digital data streams. The signals through the various networks and the signals on network link 520 and through communication interface 518, which carry the digital data to and from computer system 500, are example forms of transmission media.

In an embodiment, computer system 500 can send messages and receive data, including program code and/or other types of instructions, through the network(s), network link 520, and communication interface 518. In the Internet example, a server 530 might transmit a requested code for an application program through Internet 528, ISP 526, local network 522, and communication interface 518. The received code may be executed by processor 504 as it is received, and/or stored in storage device 510, or other non-volatile storage for later execution. As another example, information received via a network link 520 may be interpreted and/or processed by a software component of the computer system 500, such as a web browser, application, or server, which in turn issues instructions based thereon to a processor 504, possibly via an operating system and/or other intermediate layers of software components.

In an embodiment, some or all of the systems described herein may be or comprise server computer systems, including one or more computer systems 500 that collectively implement various components of the system as a set of server-side processes. The server computer systems may include web server, application server, database server, and/or other conventional server components that certain above-described components utilize to provide the described functionality. The server computer systems may receive network-based communications comprising input data from any of a variety of sources, including without limitation user-operated client computing devices such as desktop computers, tablets, or smartphones, remote sensing devices, and/or other server computer systems.

In an embodiment, certain server components may be implemented in full or in part using "cloud"-based components that are coupled to the systems by one or more networks, such as the Internet. The cloud-based components may expose interfaces by which they provide processing, storage, software, and/or other resources to other components of the systems. In an embodiment, the cloud-based components may be implemented by third-party entities, on behalf of another entity for whom the components are deployed. In other embodiments, however, the described systems may be implemented entirely by computer systems owned and operated by a single entity.

In an embodiment, an apparatus comprises a processor and is configured to perform any of the foregoing methods. In an embodiment, a non-transitory computer readable storage medium, storing software instructions, which when executed by one or more processors cause performance of any of the foregoing methods.

### 6.0. EXTENSIONS AND ALTERNATIVES

As used herein, the terms "first," "second," "certain," and "particular" are used as naming conventions to distinguish queries, plans, representations, steps, objects, devices, or other items from each other, so that these items may be referenced after they have been introduced. Unless otherwise specified herein, the use of these terms does not imply an ordering, timing, or any other characteristic of the referenced items.

In the drawings, the various components are depicted as being communicatively coupled to various other components by arrows. These arrows illustrate only certain examples of information flows between the components. Neither the direction of the arrows nor the lack of arrow lines between certain components should be interpreted as indicating the existence or absence of communication between the certain components themselves. Indeed, each component may feature a suitable communication interface by which the component may become communicatively coupled to other components as needed to accomplish any of the functions described herein.

In the foregoing specification, embodiments of the invention have been described with reference to numerous specific details that may vary from implementation to implementation. Thus, the sole and exclusive indicator of what is the invention, and is intended by the applicants to be the invention, is the set of claims that issue from this application, in the specific form in which such claims issue, including any subsequent correction. In this regard, although specific claim dependencies are set out in the claims of this application, it is to be noted that the features of the dependent claims of this application may be combined as appropriate with the features of other dependent claims and with the features of the independent claims of this application, and not merely according to the specific dependencies recited in the set of claims. Moreover, although separate embodiments are discussed herein, any combination of embodiments and/or partial embodiments discussed herein may be combined to form further embodiments.

Any definitions expressly set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A method comprising:
illuminating (402), by a light source (210) located at a specific spatial location, one or more physical objects in a physical environment;
detecting (404), by a first sensor element of a first light detector (220) at a first spatial location, a first event of a first light reflection from an exterior surface position of a specific physical object in the one or more physical object illuminated by the light source (210);
detecting (406), by a second sensor element of a second light detector (220) at a second spatial location, a second event of a second light reflection from the exterior surface position of the specific physical object illuminated by the light source (210);
generating (408), based at least in part on the first and second events and the first and second spatial locations, time-of-flight measurements and triangulation measurements;
determining (410), based at least in part on the time-of-flight measurements and triangulation measurements, a set of specific spatial coordinate values for the exterior surface position of the specific physical object.

2. The method of Claim 1, wherein the light source (210) emits a series of light pulses into the physical environment, and wherein both the first light reflection and the second light reflection are triggered by a same light pulse in the series of light pulses that illuminates the specific physical object.

3. The method of Claim 1 or 2, wherein the first event of the first light detection is isolated through first time gating operations performed on a first sensor data signal generated by the first sensor element, and wherein the second event of the second light detection is isolated through second time gating operations performed on a second sensor data signal generated by the second sensor element.

4. The method of any of the preceding claims, wherein the first and second spatial locations of the first and second detectors (220) relate to the specific spatial location of the light source (210) with defined spatial offsets in a three-dimensional, 3D, sensing device, and wherein device geometric information of the 3D sensing device is continuously re-calibrated in field operations with reference 3D positions established through 3D sensing operations.

5. The method of any of the preceding claims, wherein the first light detector (220) includes a first array of sensor elements having a third sensor element in addition to the first sensor element, wherein the second light detector (220) includes a second array of sensor elements having a fourth sensor element in addition to the second sensor element, wherein the third and fourth sensor elements concurrently detect third and fourth events of light reflections while the first and second sensor elements detect the first and second events, and wherein second time-of-flight measurements and second triangulation measurements generated with the third and fourth sensor elements are concurrently being used to determine a second set of specific spatial coordinate values for a second exterior surface position of one of the one or more physical objects while the time-of-flight measurements and triangulation measurements generated with the first and second sensor elements are being used to determine the set of specific spatial coordinate values for the exterior surface position of the specific physical object.

6. The method of any of the preceding claims, wherein the first and second detectors (220) are used to capture ambient light to generate full-frame images.

7. The method of any of the preceding claims, wherein at least one of the first sensor element or the second sensor element is a Geiger-mode light sensor.

8. One or more non-transitory computer readable media (506, 510) storing a program of instructions that is executable by a device to perform the steps of a method according to any of claims 1 to 7.

9. A system (500), comprising one or more computing processors (504) and one or more non-transitory computer readable media (506, 510) storing a program of instructions that is executable by the one or more computing processors (504) to perform the steps of a method according to any of claims 1 to 7.
